# EUROPEAN PATENT SPECIFICATION

(11) **EP 3 225 958 B1**
(45) Date of publication and mention of the grant of the patent: **01.09.2021**
(21) Application number: 15862327.2
(22) Date of filing: 18.11.2015
(51) Int. Cl.: G01F 1/692

(54) **THERMAL-TYPE FLOW RATE SENSOR**
WÄRMEFLUSSRATENMESSER
CAPTEUR DE DÉBIT DU TYPE THERMIQUE

(30) Priority: 28.11.2014 JP 2014240731
(43) Date of publication of application: 04.10.2017
(73) Proprietor: Hitachi Automotive Systems, Ltd., Hitachinaka-shi, Ibaraki 312-8503 (JP)
(72) Inventor: DOI, Ryosuke, Hitachinaka-shi, Ibaraki 312-8503 (JP); TASHIRO, Shinobu, Hitachinaka-shi, Ibaraki 312-8503 (JP); ONOSE, Yasuo, Hitachinaka-shi, Ibaraki 312-8503 (JP); SAKUMA, Noriyuki, Tokyo 100-8280 (JP)
(74) Representative: MERH-IP Matias Erny Reichl Hoffmann Patentanwälte PartG mbB
(86) International application number: PCT/JP2015/082329
(87) International publication number: WO 2016/084664

(56) References cited:
- EP-A1- 1 865 296
- EP-A2- 1 944 585
- DE-A1-102011 089 898
- JP-A- H0 886 671
- JP-A- H11 142 200
- JP-A- 2004 518 987
- JP-A- 2006 047 272
- JP-A- 2014 119 330
- JP-A- 2014 119 330
- JP-A- 2015 025 822
- JP-B2- 3 319 173
- US-A- 6 030 709
- US-A1- 2008 250 855
- US-A1- 2013 199 280
- US-A1- 2015 040 653

## Description

### Technical Field

The present invention relates to a sensor for detecting physical quantity, and particularly relates to a thermal-type flow rate sensor.

### Background Art

Conventionally, as an air flow rate sensor to be provided in an inhaled air path of an internal combustion engine of an automobile or the like for measuring an amount of inhaled air, a thermal-type air flow rate sensor has become a mainstream, because it can detect a mass air amount directly.

Recently, an air flow rate element produced by: depositing a resistor or an insulation film onto a silicone substrate by a semiconductor micromachining technique; subsequently removing a part of the silicone substrate with a solution represented by potassium hydroxide (KOH) solution or the like; and forming a thin film portion (diaphragm) has been drawn attention, because it can exhibit rapid responsivity and detect a counter flow detection.

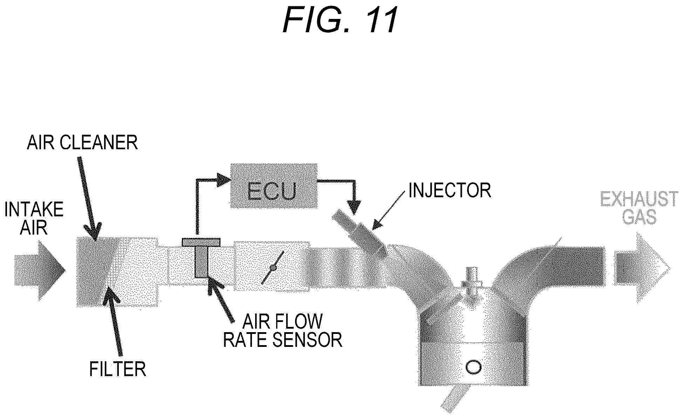

Whereas, one of the functions required for such a thermal-type flowmeter of a car component is dust resistance. A thermal-type flowmeter of a car component is generally disposed at a downstream of an air cleaner filter as shown in FIG. 11. Most of foreign substances (dust, water, fiber waste, gravel and the like) that enter an air intake duct are trapped by the air cleaner filter.

However, a mesh size of the air cleaner filter is generally 100 um or less. Therefore, foreign substances with a size of 100 um or less are not trapped by the air cleaner filter, and enters the air intake duct. When these foreign substances reach a diaphragm portion of a sensing element of the thermal-type flowmeter and is attached to its surface, a heat capacity is changed, and a discharge characteristic is accordingly changed, so that an output of the sensing element is also changed, thereby causing a detection error.

A technique for solving the above-mentioned problem is described in PTL 1. PTL 1 discloses the technique in which at least a part of a flow path has a static electricity dissipation property. According to the technique disclosed in PTL 1, electrified foul particles are discharged by a static electricity dissipation property portion before reaching a sensor element, whereby accumulation of such electrified foul particles to the sensor element can be prevented.

In PTL 2 an object of the present invention is to provide a thermal type flow rate sensor that offers high sensitivity and improved reliability comprising a heating temperature sensor having temperature-sensitive resistors.

PTL 3 discloses a thermal flow rate sensor comprising a semiconductor substrate and a layered structure.

### Citation List

### Patent Literature

PTL 1: DE102010020264A1
PTL 2: US 2013/199280 A1
PTL 3: EP 1 865 296 A1

### Summary of Invention

### Technical Problem

According to the technique of PTL 1, the reduction of an amount of the electrified foul particles that reach the sensor element can reduce the deposition of the foul matters to the sensor element. Nevertheless, it is difficult to discharge all of the foul particles that come flying to the sensor element, and there is a risk that the foul particles which are already discharged before reaching the sensor element may be electrified again by colliding with other undischarged foul particles. Therefore, the technique of PTL 1 needs more consideration about how to prevent the deposition of the electrified foul particles to the sensor element.

An object of the invention is to provide a thermal-type flow rate sensor having a superior antifouling property.

### Solution to Problem

In order to attain the above object, a thermal-type flow rate sensor of the present invention is a thermal-type flow rate sensor according to claim 1. Dependent claims relate to preferred embodiments of the present invention.

### Advantageous Effects of Invention

According to the invention, a thermal-type flow rate sensor having a superior antifouling property can be provided.

### Brief Description of Drawings

[FIG. 1] FIG. 1 is an explanatory drawing of a thermal-type flow rate sensor of the present invention in one embodiment.
[FIG. 2] FIG. 2 is an explanatory drawing of a conventional thermal-type flow rate sensor in one embodiment.
[FIG. 3] FIG. 3 is an explanatory drawing of the conventional thermal-type flow rate sensor in one embodiment.
[FIG. 4] FIG. 4 is a drawing for explaining a circuit of the conventional thermal-type flow rate sensor.
[FIG. 5] FIG. 5 is an explanatory drawing of the conventional thermal-type flow rate sensor in one embodiment.
[FIG. 6] FIG. 6 a drawing for explaining dust attachment in the conventional thermal-type flow rate sensor.
[FIG. 7] FIG. 7 is an explanatory drawing of the thermal-type flow rate sensor of the present invention in one embodiment.
[FIG. 8] FIG. 8 is an explanatory drawing of the thermal-type flow rate sensor of the present invention in one embodiment.
[FIG. 9] FIG. 9 is an explanatory drawing of the thermal-type flow rate sensor of the present invention in one embodiment.
[FIG. 10] FIG. 10 is an explanatory drawing of the thermal-type flow rate sensor of the present invention in one embodiment.
[FIG. 11] FIG. 11 is an explanatory drawing of a layout for installing an air flow rate sensor into an actual vehicle.

### Description of Embodiments

Before referring to embodiments of the present invention, the problem of the conventional sensing element we have found above will be described below.

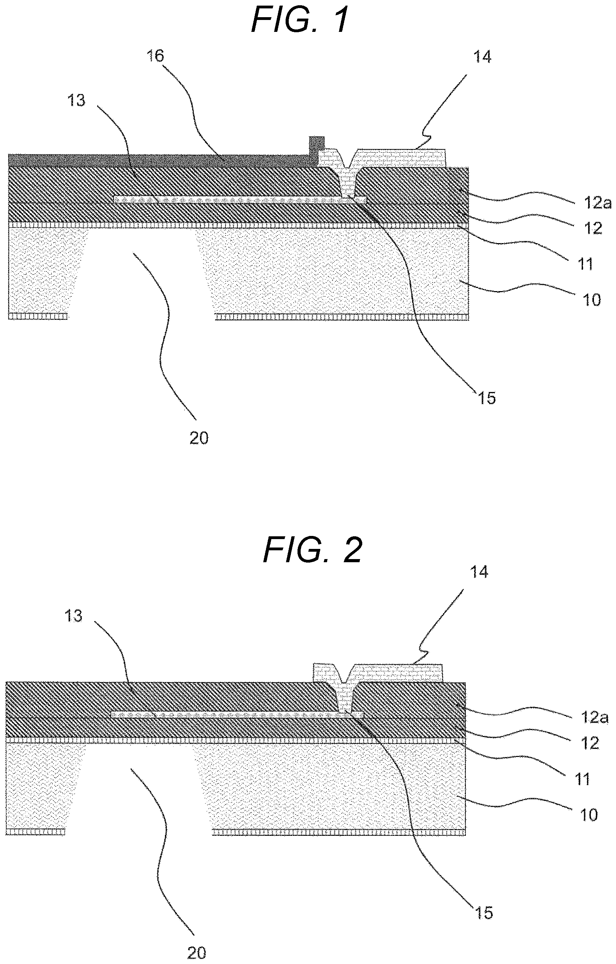

FIG. 2 illustrates a cross-sectional configuration of the conventional sensing element. The sensing element is produced by a following method. Firstly, by treating a semiconductor substrate 10 of Si or the like by heat, a thermal oxide insulation film 11 is formed on the semiconductor substrate 10. Then, an oxide film insulation layer 12 is formed on the thermal oxide insulation film 11 by a film formation process such as a CVD method. As this oxide film insulation layer 12, an insulation film of SiO2, SiN or the like, which is generally used in an MEMS process, is used. Subsequently, a resistance wiring layer 13 is formed on the thermal oxide film insulation layer 12 by a film formation process such as a CVD method. The resistance wiring layer 13 is patterned by being etched after the film formation. After patterning the resistance wiring layer 13, a film formation process is performed again so as to form an oxide film insulation layer 12a on both of the resistance wiring layer 13 and the oxide film insulation layer 12. Thereafter, a contact portion 15 is formed by etching the oxide film insulation layer 12a above the resistance wiring layer 13, and an electrode wiring layer 14 of aluminum or the like is formed on the contact portion 15 so as to obtain electrical conduction between the resistance wiring layer 13 and the electrode wiring layer 14. The electrode wiring layer 14 is patterned by being etched so as to form an electrode pad. Finally, the semiconductor substrate 10 is etched with potassium hydroxide (KOH) from its rear surface side so as to partly remove the semiconductor substrate 10, thereby forming a diaphragm portion 20. Accordingly, a heat capacity of the diaphragm portion can be reduced, so that the sensing element can exhibit the rapid responsivity. Whereas, if foul matters are attached onto the diaphragm, the attachment of the foul matters can cause the change of the heat capacity of the diaphragm portion, which is originally small, so that its flow characteristic is accordingly changed.

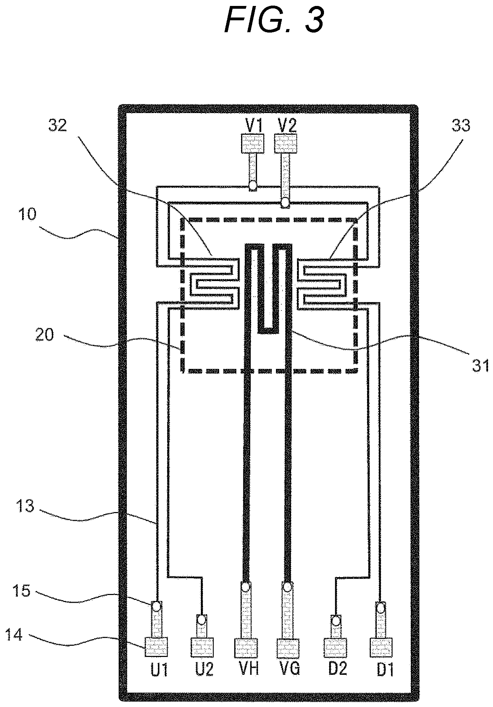

FIG. 3 illustrates an outline of a wiring diagram of the sensing element, which is seen from the surface. On the diaphragm portion 20, a heating resistor (Rh) 31, upstream temperature measurement resistors (Ru1, Ru2) 32 and downstream temperature measurement resistors (Rd1, Rd2) 33 are formed. The heating resistor (Rh) 31 is arranged at a central part of the diaphragm portion 20, the upstream temperature measurement resistors (Ru1, Ru2) 32 are arranged on an upstream side, and the downstream temperature measurement resistors (Rd1, Rd2) 33 are arranged on a downstream side of the heating resistor (Rh) 31. Herein, all of the resistors (Rh, Ru1, Ru2, Rd1 and Rd2) are formed to have equal resistance values. These resistors (Rh, Ru1, Ru2, Rd1 and Rd2) are formed of the resistance wiring layer 13 in FIG. 2, and are connected with the electrode wiring layer 14 via the contact portion 15.

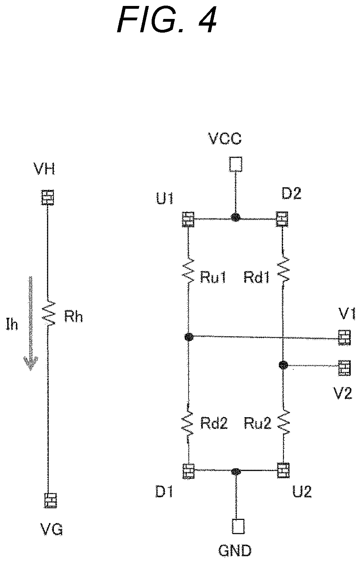

By forming a circuit as shown in FIG. 4 with the respective resistors (Rh, Ru1, Ru2, Rd1 and Rd2), an output according to an air flow rate can be obtained. The heating resistor (Rh) 31 is heated by application of a current from outside. In the case of no flow rate, since temperature distribution of the diaphragm portion 20 between the upstream and the downstream is bilaterally symmetry, potentials of V1 and V2 in FIG. 4 is equal, whereby a flow rate output (V1 - V2) is zero. On the other hand, in the case where air flows, there is a difference in temperature distribution between the upstream and the downstream, and a bridge circuit output is consequently changed, whereby it is possible to obtain the output according to the flow rate.

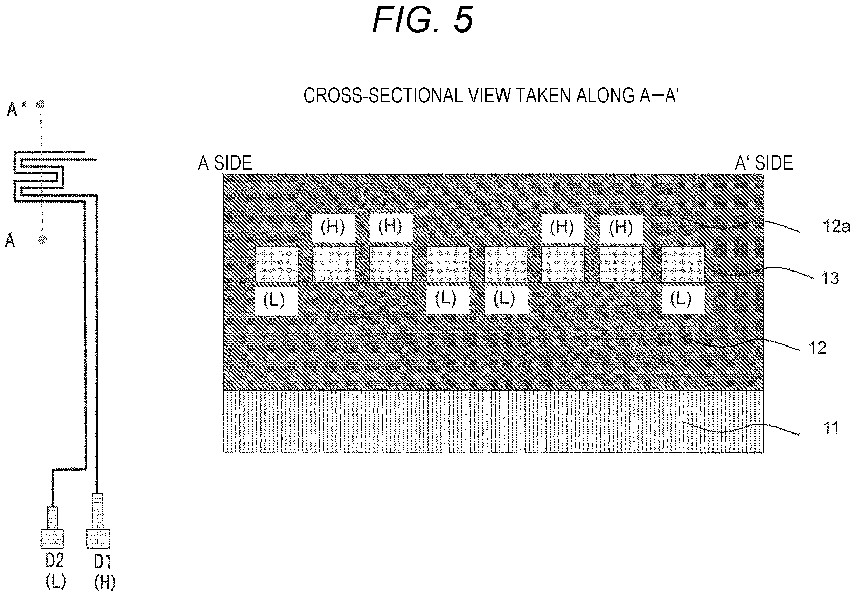

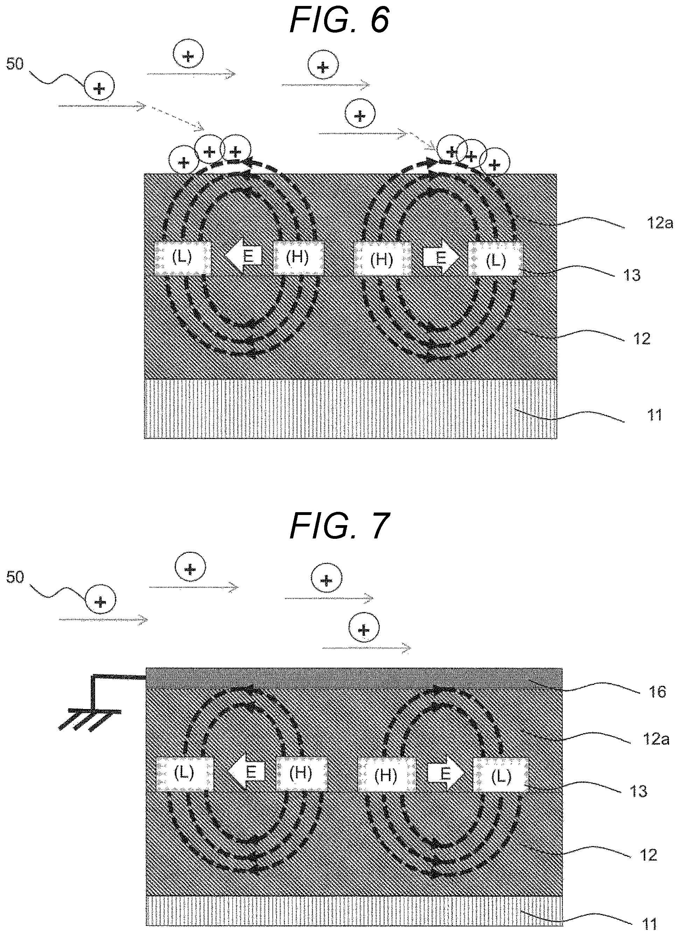

Herein, wiring potentials of the temperature measurement resistors (Rh, Ru1, Ru2, Rd1 and Rd2) will be focused. FIG. 5 is a cross-sectional view illustrating a structure of a wiring portion (A-A') of the downstream temperature measurement resistor. In FIG. 5, a wiring on a left hand (A side) has a D2 potential and thus is Low. Next, a second left wiring has a D1 potential and thus is High. Also, a third left wiring has a D1 potential and thus is High. Next, a fourth left wiring has a D2 potential and thus is Low. Accordingly, as the wirings of the temperature measurement resistors have different potential levels alternately with certain regularity, so that an electric field (E) is generated between the wirings at the different potentials as shown in FIG. 6, thereby generating lines of electric force. In this case, if dust 50 having an electric charge comes flying onto a surface of the element, the dust 50 is trapped by the surface of the element to draw a Coulomb force diagram. In particular, fine dust, which is hardly affected by centrifugal separation or inertial separation, is likely to be electrified by friction or the like of the dust with each other, and thus is trapped by the surface of the element due to the generation of the above-described Coulomb force. The inventors of the present invention have found this problem as a result of their keen study.

Then, when such foul matters are trapped by the surface of the sensing element, the heat capacity of the diaphragm portion 20 is changed, thereby causing a detection error in the flow rate detection. Hereinafter, embodiments of the present invention for solving the above-mentioned problem will be described in detail.

### (First Example)

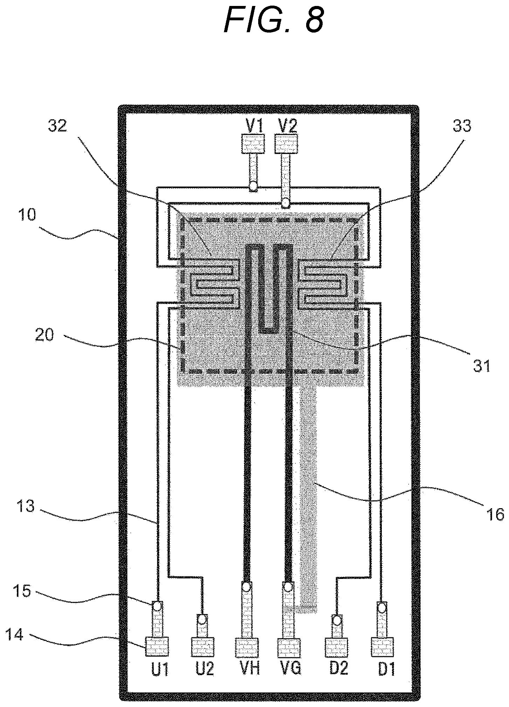

A first example of the present invention will be described with reference to FIGs. 1 and 8. Incidentally, explanations of structures that are similar to those of the above-described conventional example will be omitted.

A sensing element in the first example of the present invention is produced by: forming an electrode pad; subsequently forming a conductive film 16 on an oxide film insulation layer 12a; patterning the conductive film 16; and short-circuiting the conductive film 16 with an arbitrary wiring of the electrode pad. Thereafter, a semiconductor substrate 10 is partly removed by being etched with potassium hydroxide (KOH) from a rear surface side of the semiconductor substrate 10, thereby producing a diaphragm portion 20.

If titanium (Ti), tungsten (W), aluminum (Al), tantalum (Ta), nickel (Ni), platinum (Pt), copper (Cu), silicon (Si) or molybdenum (Mo), which is generally used in an MEMS process, is used for the conductive film 16, no specific facility is necessary during its production, whereby the conductive film 16 is able to be produced by using sputtering equipment at low costs.

As described above, layered structures (12, 12a, 13, 14 and 16) of the sensing element in the first example are formed on the semiconductor substrate 10.

Next, an effect of the conductive film 16 will be described with reference to FIG. 7. FIG. 7 illustrates a cross-sectional view similar to FIG. 6. The conductive film 16 is short-circuited to the ground (GND) so as to be kept at a constant potential (0 V). By the constant same potential layer, which is formed between the wiring layer 13 and a surface, in other words, formed on a side where the dust 50 passes, lines of electric force generated between temperature measurement resistors (Ru1, Ru2) can be prevented from being generated between the surface side and the same potential layer. That is, since the generation of the lines of electric force between the conductive film 16 and the surface is suppressed, even if the dust 50 having an electric charge comes flying to the surface of the element, the dust 50 is hardly trapped by the surface of the element due to the Coulomb force. According to the present example, even if such fine foul matters, which are hardly affected by centrifugal separation or centrifugal separation and fly with a fluid, come flying to the surface of the sensing element, since the generation of the Coulomb force for withdrawing the foul matters to the surface of the sensing element is suppressed, the attachment of the foul matters to the surface of the sensing element can be reduced, whereby the thermal-type flow rate sensor with high fouling resistance is able to be provided.

FIG. 8 illustrates an example of the patterning of the conductive film 16 in the first example of the present invention. By forming the conductive film 16 to cover a region of the wiring portion in the diaphragm portion 20, the attachment of the dust 50 to the diaphragm portion 20 due to the Coulomb force is able to be reduced.

The first example of the present invention adopts the case of short-circuiting the conductive film 16 to the GND potential, but, not according to the present invention, the similar effect can be obtained by short-circuiting the conductive film 16 to an arbitrary voltage such as a power supply voltage and keeping the same potential.

The effect of keeping the potential of the conductive film 16 constant will be described below. Since the conductive film 16 has the conductivity, it is expected that, unless connecting the conductive film 16 to an arbitrary voltage, some electric field shielding effects can be obtained. However, since a distance between the conductive film 16 formed by the MEMS process and a resistance wiring layer 13 is generally 3 um or less, a potential of the resistance wiring layer 13 might affect the potential of the conducting film 16 due to crosstalk between the adjacent wirings. The potential of the resistance wiring layer 13 varies according to positions of the heating resistor Rh and the temperature measurement resistors Ru and Rd, and also fluctuates according to a time (flow rate) change. Thus, the potential level of the conductive film 16 at a position, which might be affected by the crosstalk between the adjacent wirings, is considered to fluctuate according to the position and a time. That is, due to the crosstalk between the conductive film 16 and the resistance wiring layer 13 that is the adjacent wiring, a region having a different potential is created in the conductive film 16 itself, whereby lines of electric force are possibly generated on between the conductive film 16 and the surface. According to the present example, the conductive film 16 is set to have the constant potential, thereby suppressing both of: the influence of the crosstalk between the adjacent wirings; and the generation of the lines of electric force between the conductive film 16 and the surface.

Further, the potential for short-circuiting the conductive film 16 is the GND potential. The dust 50, which comes flying, might be electrified with static electricity of several kV or more. In the not to the present invention corresponding case of short-circuiting the conductive film 16 to the power supply voltage, the conductive film 16 is connected with a power supply circuit of a driving circuit. In this case, if the dust 50 electrified with static electricity of several kV or more is in contact with the conductive film 16, such high static electricity is to be applied to the driving circuit, so that the driving circuit might be broken. In order to prevent this risk, if short-circuiting the conductive film 16 to the power supply voltage, a protective circuit for protecting the driving circuit is necessary to be provided. On the other hand, in the case according to the invention, where the short-circuit potential of the conductive film 16 is the GND potential, since the conductive film 16 is not in contact with the power supply circuit of the driving circuit, even if the dust 50 electrified with static electricity of several kV or more is in contact with the conductive film 16, no such high static electricity is applied to the driving circuit. In the case of short-circuiting the conductive film 16 to the GND, since the protective circuit for the driving circuit is not necessary, it is possible to downsize a circuit scale of the driving circuit and reduce the costs of the whole thermal-type flow rate sensor.

An effect for forming the conductive film 16 on the outermost surface of the sensing element will be described below. In the case where the electrified dust 50 flies along the air flow and collides with the diaphragm portion 20, when the dust 50 is in contact with the conductive film 16 that is formed on the outermost surface of the diaphragm portion 20, the electric charge of the dust 50 is removed. By removing the electricity of the dust 50, the force to bond with the surface of the sensing element can be removed from the dust 50. As a result, the dust 50, which has collided once with the surface of the sensing element, is able to be desorbed easily by the air flow, and obtains an effect that it is hardly deposited to the surface of the sensing element.

Incidentally, the above description has been directed to the case of generating the potential difference between the adjacent wirings by exemplifying the wirings of the upstream temperature measurement resistors (Ru1, Ru2), but a similar potential effect can also be obtained if such a potential difference is generated between the wirings of the downstream temperature measurement resistors (Rd1, Rd2), between the wirings of the heating resistor (Rh), between the wirings of the heating resistor (Rh) and the temperature measurement resistors (Ru1, Ru2, Rd1 and Rd2) or the like, so that the above-described effect of the invention can be totally applied to the diaphragm region in which the wirings at the plural potentials are adjacent to each other.

According to the first example of the present invention, the layered structure of the sensing element has a configuration including the constant potential layer, which is kept to have the constant potential, above the resistance layer, in other words, on the surface side of the sensing element. Since the Coulomb force, which is generated by the resistance wiring layer 13, is prevented from being generated on the surface of the sensing element by the constant potential layer, even if the electrified dust reaches the sensing element, no Coulomb force causes the force to withdraw the dust to the surface of the sensing element. Therefore, according to the first example of the present invention,

### (Second Example)

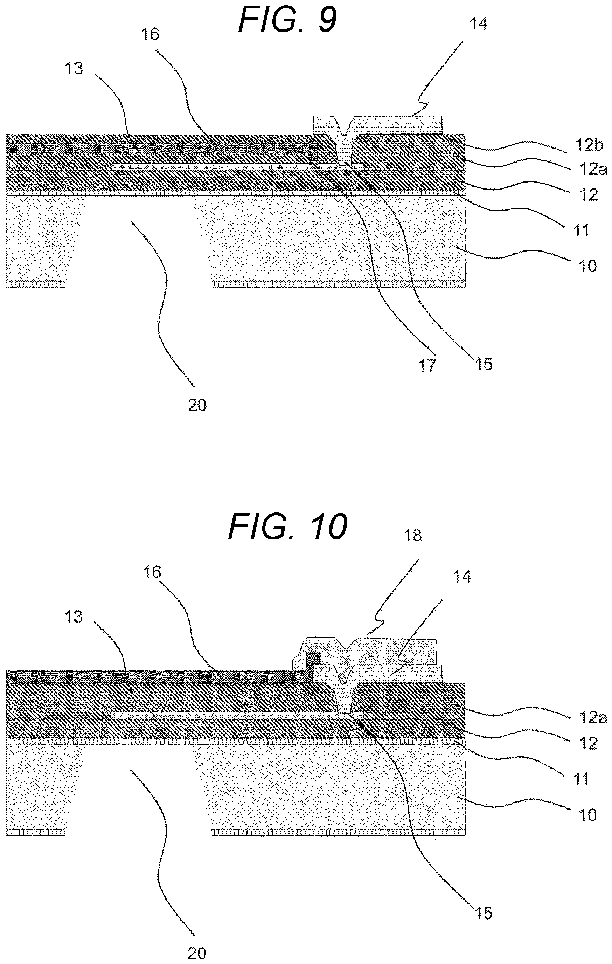

A second example of the present invention will be described with reference to FIG. 9. Incidentally, explanations of structures that are similar to those of the above-described first example will be omitted.

A different point between the first example and the second example is that the conductive film 16 of the first example is formed on the outermost surface of the sensing element, and on the other hand, a conductive film 16 of the second example is formed between a resistance wiring film 13 and a surface so as to be sandwiched between an oxide film insulation layer 12a and an oxide film insulation layer 12b.

A method for producing a sensing element of the second example, wherein the method is not part of the present invention, will be described below. After forming the oxide film insulation layer 12a, a region of the oxide film insulation layer 12a above the resistance wiring layer 13 is etched so as to form a contact portion 17. Then, by forming the conductive film 16 on the contact portion 17, the conductive film 16 is short-circuited to an arbitrary potential of the resistance wiring film 13. Thereafter, by forming the oxide film insulation layer 12b by a film formation process and etching it, the contact portion 15 is formed. An electrode wiring layer 14 of aluminum or the like is formed on the oxide film insulation layer 12b and is patterned, whereby an electrode pad is produced. Finally, the semiconductor substrate 10 is etched with potassium hydroxide (KOH) from its rear surface side, so that the semiconductor substrate 10 can be partly removed, whereby a diaphragm portion 20 is formed.

According to the present example, in addition to the effect that the surface side of the sensing element is not affected by an electric field of the resistance wiring film 13, the reliability of the conductive film 16 is able to be improved. That is, by forming such an insulation layer protecting layer between the conductive film 16 and the surface, it is possible to improve corrosion resistance.

### (Third Example)

A third example of the present invention will be described with reference to FIG. 10. Incidentally, explanations of structures that are similar to those of the first example will be omitted. A thermal-type flow rate sensor of the third example of the present invention includes, in addition to the structure of the first example, an organic protection film made of polyimide or the like for covering a connecting point between an electrode wiring layer 14 and a conductive film 16. A production method of the third example includes, after the production method of the first example, forming the organic protection film and patterning it. Thereby, the effect described in the first example can be obtained, and also, the connecting point can be protected from corrosion, whereby the thermal-type flow rate sensor with still higher reliability is able to be provided.

Incidentally, in the first and third examples, the conductive film 14 is formed after the formation of the electrode wiring layer 14, but they may be formed in the reverse order. Similarly, a diaphragm portion 20 may be formed after the formation of the organic protection film 18.

### Reference Signs List

- 10: semiconductor substrate
- 11: thermal oxide film
- 12, 12a, 12b: oxide film insulation layer
- 13: resistance wiring film
- 14: electrode wiring layer
- 15: contact portion
- 16: conductive film
- 17: contact portion
- 18: organic protection film
- 20: diaphragm
- 31: heating resistor; Rh
- 32: upstream temperature measurement resistor; Ru
- 33: downstream temperature measurement resistor; Rd
- 50: dust

## Claims

1. A thermal-type air flow rate sensor, comprising:
a semiconductor substrate (10);
a layered structure (12, 12a, 13, 14, 16) which is provided on the semiconductor substrate (10); and
a diaphragm portion (20) formed by removing a part of the semiconductor substrate (10),
wherein the layered structure includes:
a resistance wiring layer (13); and
a constant potential layer (16) formed above the resistance wiring layer (13), **characterised by**:
the resistance wiring layer (13) comprising temperature measurement resistors (32; 33) and a heating resistor (31), wherein in the region of the diaphragm portion (20) the wirings of two temperature measurements resistors (Ru1, Ru2; Rd1, Rd2) in a plan view are adjacent and parallel to each other respectively and are electrically connected to different electric potentials;
the constant potential layer (16) being electrically connected to a constant potential to keep the constant potential layer at said same constant potential, wherein the constant potential of the constant potential layer is a ground (GND) potential, and
the constant potential layer (16) being formed to cover a region of the resistance wiring layer (13) in the diaphragm portion (20).

2. The thermal-type air flow rate sensor according to Claim 1,
wherein the constant potential layer is formed on an outermost layer.

3. The thermal-type air flow rate sensor according to Claim 1,
wherein the layered structure includes an insulation film layer which is formed above the constant potential layer.

4. The thermal-type air flow rate sensor according to any one of Claims 1 to 3,
wherein the constant potential layer includes a conductive film which contains at least any element of: titanium (Ti), tungsten (W), aluminum (Al), tantalum (Ta), nickel (Ni), platinum (Pt), copper (Cu), silicon (Si) and molybdenum (Mo).

## Patentansprüche

1. Thermischer Luftdurchflusssensor, der Folgendes umfasst:
ein Halbleitersubstrat (10);
eine Schichtstruktur (12, 12a, 13, 14, 16), die auf dem Halbleitersubstrat (10) vorgesehen ist; und
einen Membranabschnitt (20), der durch Entfernen eines Teils des Halbleitersubstrats (10) gebildet wird,
wobei die Schichtstruktur Folgendes umfasst:
eine Widerstandsdrahtschicht (13); und
eine Schicht (16) mit konstantem Potenzial, die über der Widerstandsdrahtschicht (13) ausgebildet ist, **dadurch gekennzeichnet, dass**:
die Widerstandsdrahtschicht (13) Temperaturmesswiderstände (32; 33) und einen Heizwiderstand (31) umfasst, wobei im Bereich des Membranabschnitts (20) die Drähte von zwei Temperaturmesswiderständen (Ru1, Ru2; Rd1, Rd2) in Draufsicht jeweils aneinander angrenzend und parallel zueinander sind und mit unterschiedlichen elektrischen Potenzialen elektrisch verbunden sind;
die Schicht (16) mit konstantem Potenzial mit einem konstanten Potenzial elektrisch verbunden ist, um die Schicht mit konstantem Potenzial auf dem gleichen konstanten Potenzial zu halten, wobei das konstante Potenzial der Schicht mit konstantem Potenzial ein Massepotenzial (GND) ist, und
die Schicht (16) mit konstantem Potenzial so ausgebildet ist, dass sie einen Bereich der Widerstandsdrahtschicht (13) im Membranabschnitt (20) bedeckt.

2. Thermischer Luftdurchflusssensor nach Anspruch 1, wobei die Schicht mit konstantem Potenzial als eine äußerste Schicht ausgebildet ist.

3. Thermischer Luftdurchflusssensor nach Anspruch 1, wobei die Schichtstruktur eine Isolierschichtlage umfasst, die über der Schicht mit konstantem Potenzial ausgebildet ist.

4. Thermischer Luftdurchflusssensor nach einem der Ansprüche 1 bis 3, wobei die Schicht mit konstantem Potenzial eine leitfähige Lage umfasst, die wenigstens eines der folgenden Elemente enthält: Titan (Ti), Wolfram (W), Aluminium (AI), Tantal (Ta), Nickel (Ni), Platin (Pt), Kupfer (Cu), Silizium (Si) und Molybdän (Mo).

## Revendications

1. Capteur de débit d'air du type thermique, comprenant :
un substrat semi-conducteur (10) ;
une structure en couches (12, 12a, 13, 14, 16) qui est prévue sur le substrat semi-conducteur (10) ; et
une portion de diaphragme (20) formée en retirant une partie du substrat semi-conducteur (10),
dans lequel la structure en couches inclut :
une couche à câblage de résistance (13) ; et
une couche à potentiel constant (16) formée au-dessus de la couche à câblage de résistance (13),
**caractérisé en ce que** :
la couche à câblage de résistance (13) comprend des éléments résistifs de mesurage de température (32 ; 33) et un élément résistif chauffant (31), dans lequel, dans la région de la portion de diaphragme (20), les câblages de deux éléments résistifs de mesurage de température (Ru1, Ru2 ; Rd1, Rd2) dans une vue en plan sont adjacents et parallèles l'un à l'autre respectivement et
sont connectés électriquement à différents potentiels électriques ;
la couche à potentiel constant (16) est connectée électriquement à un potentiel constant pour garder la couche à potentiel constant audit même potentiel constant, dans lequel le potentiel constant de la couche à potentiel constant est un potentiel de terre (GND), et
la couche à potentiel constant (16) est formée pour couvrir une région de la couche à câblage de résistance (13) dans la portion de diaphragme (20).

2. Capteur de débit d'air du type thermique selon la revendication 1,
dans lequel la couche à potentiel constant est formée sur une couche la plus à l'extérieur.

3. Capteur de débit d'air du type thermique selon la revendication 1,
dans lequel la structure en couches inclut une couche de film d'isolation qui est formée au-dessus de la couche à potentiel constant.

4. Capteur de débit d'air du type thermique selon l'une quelconque des revendications 1 à 3,
dans lequel la couche à potentiel constant inclut un film conducteur qui contient au moins un élément quelconque parmi : titane (Ti), tungstène (W), aluminium (Al), tantale (Ta), nickel (Ni), platine (Pt), cuivre (Cu), silicium (Si) et molybdène (Mo).
